# EUROPEAN PATENT SPECIFICATION

(11) **EP 0 519 514 B1**
(45) Date of publication and mention of the grant of the patent: **23.10.1996**
(21) Application number: 92110456.8
(22) Date of filing: 20.06.1992
(51) Int. Cl.: G01M 3/26, G01M 3/32

(54) **Method and device for wheel rim leak detection**
Verfahren und Einrichtung zur Dichtheitsprüfung von gegossenen Radfelgen
Methode et dispositif pour tester l'étanchéité de jantes moulées

(30) Priority: 21.06.1991 IT PD910113
(43) Date of publication of application: 23.12.1992
(73) Proprietor: BORLI ENGINEERING S.r.l., I-35027 Noventa Padovana (IT)
(72) Inventor: Zoccoletti, Giancarlo, I-30010 Campolongo Maggiore (Venezia) (IT); Dinon, Enrico, I-31022 Preganziol (Treviso) (IT)
(74) Representative: Gustorf, Gerhard, Dipl.-Ing.

(56) References cited:
- DE-A- 2 912 100
- US-A- 4 754 638
- US-A- 4 852 390

## Description

The present invention relates to a method and a device for wheel rim air leak detection.

Up to now, the tests for the seal of wheel rims for vehicles obtained by fusion, to be used on wheels without inner tube (tubeless), have been carried out following two different principles. In both of them, the inner volume of the rim was isolated from the environment by means of special sealing surfaces. The set was introduced into a water volume, and air, at a high pressure, was let into the inner volume of the rim. Therefore, it was possible to verify the presence of possible small bubbles indicating the incorrect seal of the walls of the rim. The inconveniences of this system depend on the fact that the inspection is entrusted to a controller, that it is not possible to quantify the value of the loss and that the pressure is exerted in the sense opposite to the operation one.

A similar method is described in US-A 4 754 638 relating to an apparatus and a method for leak testing an automotive wheel rim the flanges of which create, together with the walls of a housing, an interior and an exterior chamber. These test chambers are evacuated, and then one of them, preferably the inner chamber, is filled with a gas while the outer chamber is placed at or below atmosperic pressure. A scavenging gas flow is initiated through the interior chamber after a brief delay, which flow is collected and directed to a trace gas sensor to detect the presence of trace gas in the interior chamber resulting from leakage through the wheel rim.

From US-A 4 852 390 a wheel rim leak detecting system is known in which the rim is also positioned within a housing such that two chambers are formed. One of these chambers is supplied with air under pressure, whereas microphones are positioned in the other chamber for detecting leakage of air through the rim as a function of intensity of ultrasonic radiation emitted thereby.

Another inspection system consists in introducing gas, at a high pressure, into a chamber exterior to the rim and then inspecting the possible variation of gas pressure in the inner isolated chamber. This system presents the problem of the difficult identification of the pressure variation in the inner chamber, which is very limited, because of the considerable volume of the inner chamber.

DE-A 29 12 100 relates to a system for the leak test of hollow bodies as heating tubes or motor casings. The body to be checked is inserted into a pressure chamber the walls of which are hermetically sealed against the openings of the body. The pressure chamber is filled with air that is simultaneously fed to a valve of a compensating unit measuring the internal pressure of the body.

In order to solve the above mentioned problems, a new method and a new equipment for the air seal test on wheel rims for vehicles have been studied.

The wheel rim is basically composed of a cylinder with edges, spokes and the central hub. Two opposed sealing surfaces are placed on the edges of the cylinder, so as to create a volume, which is called inner volume, defined by the cylinder and by the opposed surfaces. The set is filled with liquid and is introduced into a pressure chamber. By increasing the pressure external to the rim, the possible passage of gas through the walls of the cylinder produces a sudden increase in the pressure of the incompressible liquid, which is detected by a differential gauge, giving values that can be correlated to the entity of the loss.

Furthermore, by keeping a column of liquid constant above the gauge insertion point, a preloading value is determined on the gauge. In this way, the promptness of the answer is increased and both the uniformity of the initial data and the repeatability of the test are guaranteed.

The equipment is composed, in its essential parts, of two plates (upper and lower) provided with gaskets, in such a way as to guarantee a sealing contact between the mentioned plates and the edges of the cylinder of the wheel rim. On the upper plate a conduit with an overflow at a constant height and with a sealing valve below is connected. A liquid pressure transducer (differential gauge) is placed under this sealing valve.

On the lower plate a conduit with a valve is connected, for the admission of liquid contained in a tank. The tank is placed at a higher position than the overflow. In this way, the liquid fed into the inner chamber is naturally obtained by gravity.

The set described is, in its turn, contained in an airtight chamber, in which it is possible, with special conduits, to bring the pressure of the test gas to higher values than the operation pressure.

By way of a non-limitative example and with reference to the attached drawing, a practical example of execution of the invention is described.

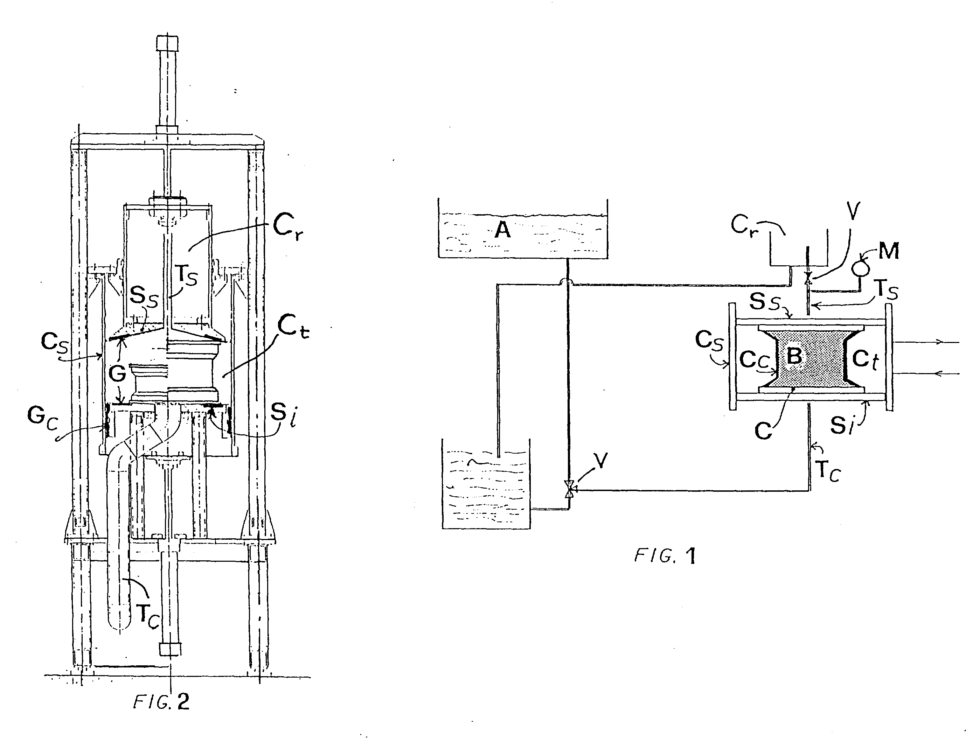

Figure 1 represents the working diagram of the invention and Figure 2 shows a preferred embodiment of the device according to the invention.

The working diagram of figure 1 shows the following parts: the rim C, the inner volume B, filled with liquid, the wall Cc of the cylinder, the surfaces of upper (Ss) and of the lower (Si) closing plates, the feed conduit Tc and the overflow conduit Ts, the liquid tank A, the valves V, the airtight chamber Ct and the differential gauge M.

According to the example of figure 2, the upper (Ss) and lower (Si) surfaces are provided with gaskets G; in particular, the upper surface Ss has a truncated-cone shape and is vertically movable. In this way, it can position the rim and it is possible to check rims of different diameters and lengths (see figure 2). The two surfaces Ss, Si are connected to the special feed conduit Tc and overflow conduit Ts.

The airtight chamber Ct is delimited partly by the upper (Ss) and lower (Si) surfaces and by a cylinder Cs that slides vertically on the external edges of the surfaces Ss, Si, suitably provided with gaskets Gc.

Just above the upper surface Ss, a chamber Cr is provided for the recovery of the liquid flowing out of the overflow conduit Ts during the liquid saturation of the inner volume B of the rim C.

## Claims

1. Method for detecting air leaks in a wheel rim (C) having the form of a cylinder the edges of which are positioned in sealing engagement with two opposite closing surfaces (Ss, Si) forming in the rim (C) an inner volume (B) and, together with the outer surface of the cylinder wall (Cc), an outer airtight pressure chamber (Ct), characterised by filling the inner volume (B) completely with an incompressible liquid and increasing the gas pressure in the outer chamber (Ct) such that the gas may flow through possible porosities and defects of the cylinder wall (Cc) into the inner volume (B) where the pressure increase of the liquid is detected.

2. Device for detecting air leaks in a wheel rim (C) having the form of a cylinder the edges of which are positioned in sealing engagement with the closing surfaces (Ss, Si) of two opposite closing plates forming within the cylinder an inner volume (B), the set of said two plates and of the rim (C) being positioned within a housing forming, outside of the cylinder, an outer airtight pressure chamber (Ct) between said two plates, characterised in that a liquid tank (A) is provided, which is connected, by means of a feed conduit (Tc) leading through the lower surface (Si) of said two closing surfaces (Ss,Si), with the inner volume (B), to which a pressure gauge (M) is connected, and that the outer chamber (Ct) is connected to a gas conduit for increasing the gas pressure within said outer chamber (Ct).

3. Device according to claim 2, wherin the inner volume (B) is connected, via the upper surface (Ss) of said two surfaces, with an overflow conduit (Ts), the overflow conduit (Ts) and the feed conduit (Tc) being provided with closing valves (V).

4. Device according to claim 2 or 3, wherein the upper surface (Ss) ha a truncated-cone shape and is vertically movable within the outer camber (Ct).

## Patentansprüche

1. Verfahren zum Feststellen von luftundichten Stellen in einer Radfelge (C), die die Form eines Zylinders hat, dessen Kanten in abdichtende Berührung mit zwei gegenüberliegenden Schließflächen (Ss, Si) gebracht werden, wodurch in der Radfelge (C) ein Innenraum (B) und zusammen mit der Außenfläche der Zylinderwand (Cc) eine äußere, luftdichte Druckkammer (Ct) gebildet werden, dadurch gekennzeichnet, daß der Innenraum (B) vollständig mit einer inkompressiblen Flüssigkeit gefüllt und der Gasdruck in der äußeren Druckkammer (Ct) so lange erhöht wird, bis das Gas durch möglicherweise vorhandene poröse oder defekte Stellen der Zylinderwand (Cc) in den Innenraum (B) strömen kann, wo der Druckanstieg in der Flüssigkeit nachgewiesen wird.

2. Vorrichtung zum Feststellen von luftundichten Stellen in einer Radfelge (C), die die Form eines Zylinders hat, dessen Kanten an den Schließflächen (Ss, Si) von zwei gegenüberliegenden Platten abdichtend anliegen, die in dem Zylinder einen Innenraum (B) bilden, wobei die aus den beiden Platten und der Radfelge (C) gebildete Einheit in ein Gehäuse eingesetzt ist, das außerhalb des Zylinders eine äußere, luftdichte Druckkammer (Ct) zwischen den beiden Platten begrenzt, dadurch gekennzeichnet, daß ein Flüssigkeitsbehälter (A) vorgesehen ist, der über eine durch die untere Fläche (Si) der beiden Schließflächen (Ss, Si) geführte Zulaufleitung (Tc) mit dem Innenraum (B) verbunden ist, an welchen ein Druckmeßgerät (M) angeschlossen ist, und daß die äußere Druckkammer (Ct) mit einer Gasleitung verbunden ist, über welche der Gasdruck in der äußeren Kammer (Ct) erhöht werden kann.

3. Vorrichtung nach Anspruch 2, dadurch gekennzeichnet, daß der Innenraum (B) über die obere Fläche (Ss) der beiden Schließflächen mit einer Überlaufleitung (Ts) verbunden ist, wobei in die Überlaufleitung (Ts) und in die Zulaufleitung (Tc) jeweils ein Schließventil (V) geschaltet ist.

4. Vorrichtung nach Anspruch 2 oder 3, dadurch gekennzeichnet, daß die obere Schließfläche (Ss) eine Kegelstumpfform hat und innerhalb der äußeren Druckkammer (Ct) vertikal verschiebbar ist.

## Revendications

1. Méthode pour tester l'étanchéité d'une jante de roue (C) qui a la forme d'un cylindre dont les bords sont positionés à contact étanche contre deux surfaces de fermeture opposées (Ss, Si), formant de cette manière une chambre intérieure (B) dans la jante (C) et, conjointement avec la surface extérieure de la paroi (Cc) du cylindre, une chambre extérieure de compression (Ct) étanche à l'air, caractérisée par le fait qu'on remplit la chambre intérieure (B) complètement avec un liquide incompressible et qu'on augmente la pression de gaz dans la chambre extérieure (Ct) jusqu' à ce que le gaz puisse passer à travers d'éventuelles porosités et lacunes de la paroi (Cc) du cylindre dans la chambre intérieure (B) dans laquelle l'augmentation de pression est détectée.

2. Dispositif pour tester l'étanchéité d'une jante de roue (C) qui a la forme d'un cylindre dont les bords sont positionés à contact étanche contre les surfaces de fermeture (Ss, Si) de deux disques opposés formant une chambre intérieure (B) dans le cylindre, l'unité composée des deux disques et de la jante (C) étant positionée dans une boîte qui délimite, au dehors du cylindre, une chambre extérieure de compression (Ct) étanche à l'air située entre les deux disques, caractérisé par le fait qu'un réservoir à liquides (A) est relié par un conduit d'alimentation (Tc) passant à travers la surface inférieure (Si) des deux surfaces de fermeture (Ss, Si) à la chambre intérieure (B), à laquelle un manomètre (M) est raccordé, et que la chambre extérieure de compression (Ct) est reliée à un conduit de gaz par lequel on peut augmenter la pression de gaz dans la chambre extérieure (Ct).

3. Dispositif selon la revendication 2, caractérisé par le fait que la chambre intérieure (B) est reliée par la surface supérieure (Ss) des deux surfaces à un conduit de débordement (Ts), dans le conduit de débordement (Ts) et dans le conduit d'alimentation (Tc) étant inseré un robinet d'arrêt (V).

4. Dispositif selon la revendication 2 ou 3, caractérisé par le fait que la surface supérieure de fermeture (Ss) présente une forme tronconique et peut être déplacée verticalement dans la chambre extérieure de compression (Ct).
